# EUROPÄISCHE PATENTANMELDUNG

(11) **EP 3 617 500 A1**
(43) Veröffentlichungstag der Anmeldung: **04.03.2020**
(21) Anmeldenummer: 19193251.6
(22) Anmeldetag: 23.08.2019
(51) Int. Cl.: F03D 80/80

(54) **WINDENERGIEANLAGE MIT RECHENKNOTEN**

(30) Priorität: 30.08.2018 DE 102018121196
(71) Anmelder: WestfalenWIND IT GmbH & Co. KG, 33100 Paderborn (DE)
(72) Erfinder: Schonmakker, Gunnar, 33102 Paderborn (DE); Dubberke, Frithjof, 33098 Paderborn (DE)
(74) Vertreter: Wickord, Wiro

(57) **Zusammenfassung**

Die Erfindung betrifft eine Windenergieanlagenanordnung umfassend
- eine Windenergieanlage (1) mit einem Fundament (4), mit einem auf dem Fundament (4) abgestützten vertikal erstreckten Turm (3), mit einem vorzugsweise endseitig an dem Turm (3) gehaltenen Maschinenhaus und mit einem an dem Maschinenhaus gehaltenen und mit ebendiesem zusammenwirkenden Rotor (2),
- eine in dem Turm (3) der Windenergieanlage (1) vorgesehene Stahlkonstruktion (6) mit wenigstens einer Installationsebene (7.1, 7.2, 7.3, 7.4, 7.5) mit darauf installierten Rechenknoten und/oder mit darauf installierten, für den Betrieb der Rechenknoten notwendigen Infrastrukturgewerken,
wobei die Stahlkonstruktion (6) selbsttragend und zu einer Innenwandung (5) des Turms (3) beabstandet mittels Stützen (8) auf dem Fundament (4) der Windenergieanlage (1) abgestützt ist.

## Beschreibung

Die Erfindung betrifft eine Windenergieanlagenanordnung umfassend eine Windenergieanlage und eine Stahlkonstruktion mit Installationsebenen für Rechenknoten.

Aus der europäischen Patentanmeldung 18 184 290.7 der Anmelderin ist bekannt, Rechenknoten in einer Windenergieanlage zu installieren und in einem Normalbetriebsfall die von der Windenergieanlage selbst erzeugte Energie jedenfalls teilweise zum Betrieb der Rechenknoten bereitzustellen. Es gelingt auf diese Weise, die in der Windenergieanlage erzeugte elektrische Energie lokal zu nutzen mit der Folge, dass ein Transport der Energie nicht erforderlich ist, die für den Energietransport vorgesehenen Netze entsprechend entlastet und Übertragungsverluste vermieden werden.

Als Rechenknoten wird nachfolgend eine Rechenanlage für Rechen- und Datenspeicheranwendungen mit wenigstens einem Rechenmodul und mit wenigstens einem Datenspeichermodul bezeichnet.

Die der Erfindung zugrunde liegende Aufgabe besteht darin, die in einer Windenergieanlage installierte Rechen- beziehungsweise Speicherleistung zu erhöhen.

Zur Lösung der Aufgabe weist die Erfindung die Merkmale des Patentanspruchs 1 auf. Demzufolge umfasst die Windenergieanlagenanordnung eine Windenergieanlage mit einem Fundament, mit einem auf dem Fundament abgestützten vertikal erstreckten Turm, mit einem vorzugsweise endseitig an dem Turm gehaltenen Maschinenhaus und mit einem an dem Maschinenhaus gehaltenen und mit ebendiesem zusammenwirkenden Rotor. Weiter umfasst die Windenergieanlagenanordnung eine in dem Turm der Windenergieanlage vorgesehene Stahlkonstruktion mit wenigstens einer Installationsebene mit darauf installierten Rechenknoten und/oder mit darauf installierten, für den Betrieb der Rechenknoten notwendigen Infrastrukturgewerken, wobei die Stahlkonstruktion selbsttragend und zu einer Innenwandung des Turms beabstandet mittels Stützen auf dem Fundament der Windenergieanlage abgestützt ist.

Der besondere Vorteil der Erfindung besteht in den Installationsebenen der Stahlkonstruktion, die eine Installation von mehr Rechenknoten und damit eine Erhöhung der Rechen- und/oder Speicherleistung ermöglicht. Die Installationsebenen der Stahlkonstruktion stellen zusätzlich zu einem in der Regel vorhandenen Kellerboden eines Kellerraum und/oder einer Bodendecke in dem Fundament der Windenergieanlage potenzielle Aufstellflächen für die Installation von Rechenknoten bereit. Demzufolge bietet die erfindungsgemäße Windenergieanlagenanordnung ein Flächennutzungskonzept für eine vergrößerte nutzbare Gesamtaufstellfläche für die Installation der Rechenknoten in der Windenergieanlage an. Die Stahlkonstruktion ist selbsttragend und zu der Innenwandung des Turms beabstandet allein auf dem Fundament der Windenergieanlage abgestützt. So bleibt die Statik des Turms der Windenergieanlage vollständig erhalten beziehungsweise die Stahlkonstruktion greift nicht invasiv in die Statik des Turms ein. Dadurch ergeben sich für den Turm der Windenergieanlage keine zusätzlichen Belastungen, die eine erneute Typ-Abnahme oder dergleichen der Windenergieanlage erfordern würden.

Selbsttragend im Sinne der Erfindung ist eine Stahlkonstruktion, die allein auf dem Fundament der Windenergieanlage abgestützt ist und ansonsten keine weiteren Elemente, insbesondere nicht den Turm der Windenergieanlage, für eine Aufnahme und/oder Abstützung der Last benötigt, da sie sämtliche im Betrieb aufkommenden Belastungen selbst aufnimmt beziehungsweise in das Fundament weiterleitet. Das Fundament der Windenergieanlage umfasst dabei insbesondere eine Grundplatte beziehungsweise eine Bodendecke, auf die der Turm aufgebaut wird.

Nach einer bevorzugten Ausführungsform der Erfindung umfasst die Stahlkonstruktion wenigstens zwei und bevorzugt drei bis fünf vertikal übereinander angeordnete Installationsebenen mit darauf installierten Rechenknoten und/oder Infrastrukturgewerken. Auf diese Weise wird der sonst freie, ungenutzte Raum innerhalb des Turms der Windenergieanlage besonders effizient genutzt. Formbedingt besteht hierbei die Möglichkeit einer Skalierung der Installationsebenen beziehungsweise der durch die Installationsebenen gebildeten Aufstellflächen für die Rechenknoten beziehungsweise für die Infrastrukturgewerke durch eine konstruktive Erweiterung der Stahlkonstruktion in die Höhe.

Nach einer Weiterbildung der Erfindung sieht die Stahlkonstruktion vorzugsweise drei oder mehr und besonders bevorzugt vier mit dem Fundament verbundene, vertikal und/oder um einen Winkel von maximal 30° zur Vertikalen geneigt erstreckte Stützen vor. Die Stützen distanzieren die unterste Installationsebene der Stahlkonstruktion vertikal von der vorhandenen Grundplatte beziehungsweise Bodendecke im Fundament der Windenergieanlage. Dadurch können die Installationsebenen auf den Stützen abgestützt und über auf der Bodendecke bereits installierten Einrichtungen der Windenergieanlage angeordnet werden.

Die Stützen sind für die zuvor beschriebene Flächennutzung der Bodendecke der Windenergieanlage vorzugsweise so anzuordnen, dass zwischen den Stützen eine möglichst große, vorzugsweise freie Fläche beziehungsweise ein möglichst großer, vorzugsweise freier Raum gebildet ist. Demzufolge sind die Stützen möglichst weit voneinander distanziert angeordnet und münden möglichst nahe zu der Innenwandung des Turms in das Fundament. Sofern vier Stützen zum Abstützen der Stahlkonstruktion auf dem Fundament der Windenergieanlage verwendet werden, sind die Stützen vorzugsweise so anzuordnen, dass sie Eckpunkte in einer zueinander rechteckförmigen Anordnung bilden.

Nach einer Weiterbildung der Erfindung ist jedenfalls zwischen einzelnen Installationsebenen mit darauf installierten Rechenknoten eine Installationsebene mit darauf installierten Infrastrukturgewerken vorgesehen. Durch diese Anordnung der Installationsebenen lassen sich zwei Installationsebenen mit darauf installierten Rechenknoten von einer Installationsebene mit darauf installierten Infrastrukturgewerken einmal von oben und einmal von unten versorgen, bei einer räumlichen Trennung von Rechenknoten und Infrastrukturgewerken auf den Installationsebenen. Vorteilhaft ist bei dieser Anordnung auch, dass beispielsweise einem Wartungsdienst nur Zugang zu Installationsebenen mit darauf installierten Infrastrukturgewerken gewährt werden muss und dieser keinen Zugang zu den Rechenknoten und auf deren Datenspeichermodulen möglicherweise gespeicherten, sensiblen Daten erhält. Einem Zugang unbefugter Dritter zu den Rechenknoten ist somit vorgebeugt.

Eine Aufteilung der nutzbaren Gesamtaufstellfläche für die Rechenknoten und die Infrastrukturgewerke auf mehrere Installationsebenen begünstigt zudem ein Flächennutzungskonzept, bei dem auf den Installationsebenen jedenfalls abschnittsweise Kunden dedizierte Rechenknoten und/oder Infrastrukturgewerke installiert sind. Insbesondere Datenspeichermodule enthalten häufig sensible Daten, sodass ein unkontrollierter Zugang zu den Datenspeichermodulen durch Dritte unterbunden sein sollte. Hierfür ist eine definierte Zuordnung der Rechenknoten zu den Kunden beziehungsweise den Betreibern Voraussetzung. Es bietet sich insofern an, Installationsebenen oder Areale auf einer Installationsebene einzelnen Kunden zuzuordnen, sodass diese den Zugang darauf selbst kontrollieren können.

Nach einer Weiterbildung der Erfindung ist in dem Turm der Windenergieanlage eine bis zu dem Maschinenhaus geführte Treppe beziehungsweise Leiter und/oder eine bis zu dem Maschinenhaus geführte Aufzuganlage vorgesehen. Zusätzlich ist an der Stahlkonstruktion ein weiteres Treppensystem gehalten, das die Installationsebenen untereinander und/oder mit der Grundplatte beziehungsweise der Bodendecke der Windenergieanlage begehbar über Treppen verbindet. Die Stahlkonstruktion kann zum Transport der Rechenknoten und/oder der Infrastrukturgewerke zu den Installationsebenen ein zusätzliches Transportsystem, insbesondere ein Lastenaufzug, vorsehen. Das zusätzliche Treppensystem und das zusätzliche Transportsystem sind nicht invasiv in die Statik des Turms der Windenergieanlage eingreifend an der Stahlkonstruktion gehalten. Die Treppen des zusätzlichen Treppensystems und das zusätzliche Transportsystem sind vorzugsweise an Längsseiten der Stahlkonstruktion vorgesehen, wobei die Treppen vorzugsweise raumsparend an einer Längsseite vertikal übereinander angeordnet sind.

Nach einer Weiterbildung der Erfindung sind auf den Installationsebenen Lagerflächenbereiche und/oder begehbare Wegeflächenbereiche freigehalten, die mit dem zusätzlichen Treppensystem und/oder mit dem zusätzlichen Transportsystem der Stahlkonstruktion begehbar verbunden sind. Die Wegeflächenbereiche dienen einem Begehen der Installationsebenen, beispielsweise für Wartungs- oder Instandhaltungsarbeiten. Für Installationsarbeiten an den Rechenknoten beziehungsweise an den zugehörigen Infrastrukturgewerken sind auf den Installationsebenen jedenfalls teilweise Lagerflächenbereiche freigehalten.

Nach einer Weiterbildung der Erfindung sind als Infrastrukturgewerke Klimatisierungsanlagen und/oder Stromunterverteilungsvorrichtungen und/oder unterbrechungsfreie Stromversorgungseinrichtungen mit einem Energiespeicher vorgesehen. Die Rechenknoten benötigen für einen ordnungsgemäßen Betrieb in der Regel eine ausreichende Kühlung. Insofern sind Klimatisierungsanlagen zum Kühlen und/oder zur Steuerung einer Luftzufuhr zu den Rechenknoten vorgesehen. Eine unterbrechungsfreie Stromversorgungseinrichtung, die beispielsweise einen Notstromgenerator und/oder einen Akkumulator aufweist, ist für den Fall vorgesehen, dass die Stromversorgung der Rechenknoten unerwartet ausfällt, da andernfalls ein unerwarteter Stromausfall zu Datenverlusten oder Betriebsausfällen führen kann.

Nach einer Weiterbildung der Erfindung weisen die Rechenknoten wenigstens ein Rechenmodul und wenigstens ein Datenspeichermodul auf. Rechen- und Datenspeichermodule arbeiten grundsätzlich höchst energieintensiv, wobei sie eine kompakte Bauform beziehungsweise eine hohe Energiedichte in ihren Komponenten aufweisen. Derartige Rechenknoten sind somit grundsätzlich besonders geeignet, den in der Windenergieanlage erzeugten Strom lokal zu verbrauchen. Zudem können die von den Rechenknoten gesammelten digitalen Daten reversibel und kostengünstig distributiert werden, was ihre Verwendung besonders rentabel macht und eine Verwendung auch in abgelegenen Windenergieanlagen, beispielsweise in Offshore-Windparks auf dem Meer ermöglicht. Global unterliegt der Bedarf an Rechenleistung und digitaler Speicherkapazität ohnehin einem stetigen Wachstum.

Nach einer Weiterbildung der Erfindung sind die Rechenknoten und/oder die Infrastrukturgewerke über eine interne Verteilerleitung mit dem Maschinenhaus der Windenergieanlage verbunden derart, dass von der Windenergieanlage erzeugte elektrische Energie jedenfalls anteilig an die Rechenknoten und/oder an die Infrastrukturgewerke bereitstellbar ist. Durch einen ergänzenden Anschluss an eine externe Energiequelle kann ein unterbrechungsfreier Betrieb der Rechenknoten gewährleistet werden, insbesondere auch dann, wenn die Windenergieanlage abgeschaltet werden muss.

Ein Abschalten der Windenergieanlage kann beispielsweise bei einem Defekt oder bei ungünstigen Witterungsbedingungen erforderlich sein. Zudem besteht eine Härtefallregelung nach dem Gesetz für den Ausbau erneuerbarer Energien, wonach einzelne Stromerzeugungseinheiten, wie beispielsweise Windenergieanlagen, vom Hochspannungsnetz genommen werden müssen, wenn eine Netzüberlastung droht. Dies ist beispielsweise an Tagen mit besonders günstigen Witterungsbedingungen wie Starkwind oder einer günstigen Kombination aus Sonne und Wind der Fall, wenn ein besonders hoher Stromanteil durch erneuerbaren Energien abgedeckt wird.

Eine Nutzung der in der Windenergieanlage erzeugten elektrischen Energie durch die Rechenknoten vor Ort verhindert wie eingangs erwähnt Überlastungen und Übertragungsverluste in den Stromnetzen, da ein Energietransport entfällt. Eine derartige Verwendung steigert nicht nur die lokale Wertschöpfung, sondern ist auch gesamtökonomisch sinnvoll, da sie die Erfordernisse eines aufwendigen und langwierigen Netzausbaus reduziert.

Aus der nachfolgenden Beschreibung und den weiteren Unteransprüchen sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter. Ausführungsbeispiele der Erfindung werden nachfolgend anhand von Zeichnungen näher erläutert.

Es zeigen:
- Fig. 1: eine Prinzipdarstellung eines ersten Ausführungsbeispiels einer erfindungsgemäßen Windenergieanlagenanordnung mit einer Windenergieanlage und mit einer in einem Turm der Windenergieanlage vorgesehenen Stahlkonstruktion mit vertikal übereinander vorgesehenen Installationsebenen,
- Fig. 2: eine perspektivische Detailansicht eines zweiten Ausführungsbeispiels der erfindungsgemäßen Windenergieanlagenanordnung,
- Fig. 3: eine Seitenansicht der Windenergieanlagenanordnung nach Fig. 2,
- Fig. 4: eine Schnittansicht der Windenergieanlagenanordnung nach Fig. 2, geschnitten durch den Turm und auf Höhe eines Fundaments der Windenergieanlage,
- Fig. 5: eine Schnittansicht der Windenergieanlagenanordnung nach Fig. 2, geschnitten durch den Turm der Windenergieanlage auf Höhe einer ersten Installationsebene der Stahlkonstruktion,
- Fig. 6: eine Schnittansicht der Windenergieanlagenanordnung nach Fig. 2, geschnitten durch den Turm der Windenergieanlage auf Höhe einer zweiten Installationsebene der Stahlkonstruktion, und
- Fig. 7: eine Schnittansicht der Windenergieanlagenanordnung nach Fig. 2, geschnitten durch den Turm der Windenergieanlage auf Höhe einer dritten Installationsebene der Stahlkonstruktion.

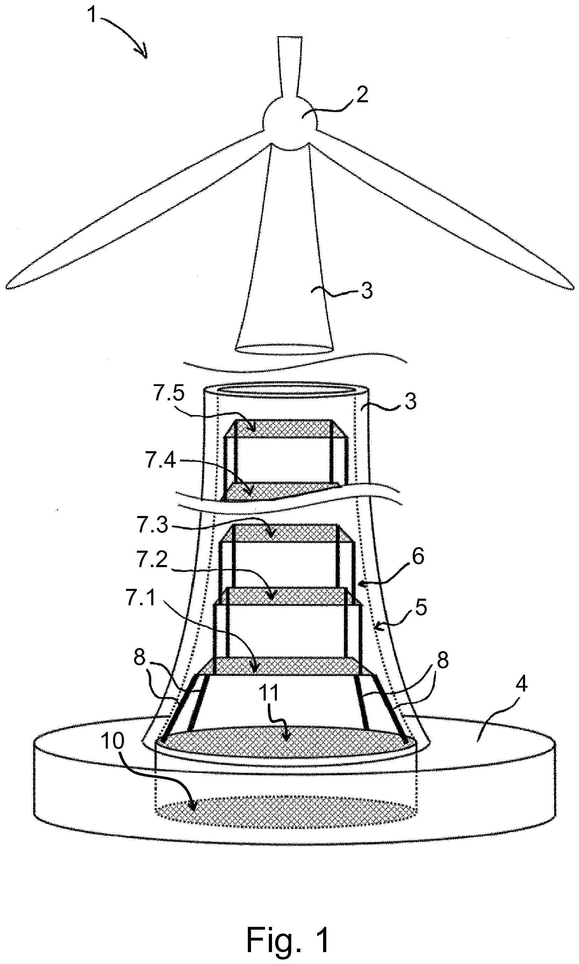

Ein erstes Ausführungsbeispiel einer erfindungsgemäßen Windenergieanlagenanordnung ist in Fig. 1 als Prinzipskizze dargestellt. Die Windenergieanlagenanordnung umfasst eine Windenergieanlage 1 mit einem Fundament 4, das einen Kellerraum mit einem Kellerboden 10 und eine Bodendecke 11 aufweist. Ferner weist die Windenergieanlage 1 einen auf der Bodendecke 11 des Fundaments 4 aufgesetzten, vertikal erstreckten und sich nach oben verjüngenden Turm 3, sowie ein endseitig auf dem Turm 3 gehaltenes Maschinenhaus mit einem Windkraftgenerator und mit einem daran gehaltenen und mit dem Windkraftgenerator zusammenwirkenden Rotor 2 auf. Weiter umfasst die Windenergieanlagenanordnung eine in dem Turm 3 der Windenergieanlage 1 vorgesehene Stahlkonstruktion 6 mit mehreren vertikal übereinander angeordneten Installationsebenen 7.1, 7.2, 7.3, 7.4, 7.5.

Die Stahlkonstruktion 6 ist selbsttragend und über vier Stützen 8 auf dem Fundament 4 der Windenergieanlage 1 abgestützt. Die Stahlkonstruktion 6 ist zu einer Innenwandung 5 des Turms 3 der Windenergieanlage 1 beabstandet, sodass die Stahlkonstruktion 6 nicht invasiv in die Statik des Turms 3 der Windenergieanlage 1 eingreift. Gleichwohl ist die Stahlkonstruktion 6 an die Gestalt des Turms 3 angepasst und weist einen möglichst geringen Abstand zu der Innenwandung 5 des Turms 3 auf, um möglichst großflächige Installationsebenen 7.1, 7.2, 7.3, 7.4, 7.5. bereitstellen zu können. Die Installationsebenen 7.1, 7.2, 7.3, 7.4, 7.5 der Stahlkonstruktion 6 bilden Aufstellflächen für eine Installation von Rechenknoten und von für den Betrieb der Rechenknoten benötigten Infrastrukturgewerken innerhalb der Windenergieanlage 1, zusätzlich zu dem potentiell als Aufstellfläche hierfür nutzbaren Kellerboden 10 und der Bodendecke 11 des Fundaments 4 an. Die Stahlkonstruktion 6 nutzt insofern den freien, ungenutzten Raum im Turm 3 der Windenergieanlage 1 und ist formbedingt innerhalb des Turms 3 in der Höhe skalierbar.

Zu den Infrastrukturgewerken, die für den Betrieb der Rechenknoten in der Windenergieanlage 1 vorgesehen sind, zählen unter anderem Klimatisierungsanlagen, insbesondere zur Kühlung der Rechenknoten, Stromunterverteilungsvorrichtungen beziehungsweise interne Verteilerleitungen zur Verteilung der in der Windenergieanlage 1 erzeugten elektrischen Energie unter anderem an die Rechenknoten und/oder an die Infrastrukturgewerke, unterbrechungsfreie Stromversorgungseinrichtungen mit einem Energiespeicher, Betriebssteuerungsvorrichtungen, sowie unter anderem Datenleitungen und Energieversorgungsleitungen.

Die Rechenknoten und/oder die Infrastrukturgewerke sind über interne Verteilerleitungen mit dem Maschinenhaus der Windenergieanlage 1 verbunden, sodass die von der Windenergieanlage 1 erzeugte elektrische Energie jedenfalls teilweise für den Betrieb der Rechenknoten und der Infrastrukturgewerke bereitgestellt werden kann. Die Rechenknoten und die Infrastrukturgewerke sind vorzugsweise mit einer externen Energiequelle zusätzlich zu der Windenergieanlage 1 verbunden, sodass sie auch bei einer Abschaltung der Windenergieanlage 1 unterbrechungsfrei betrieben werden können.

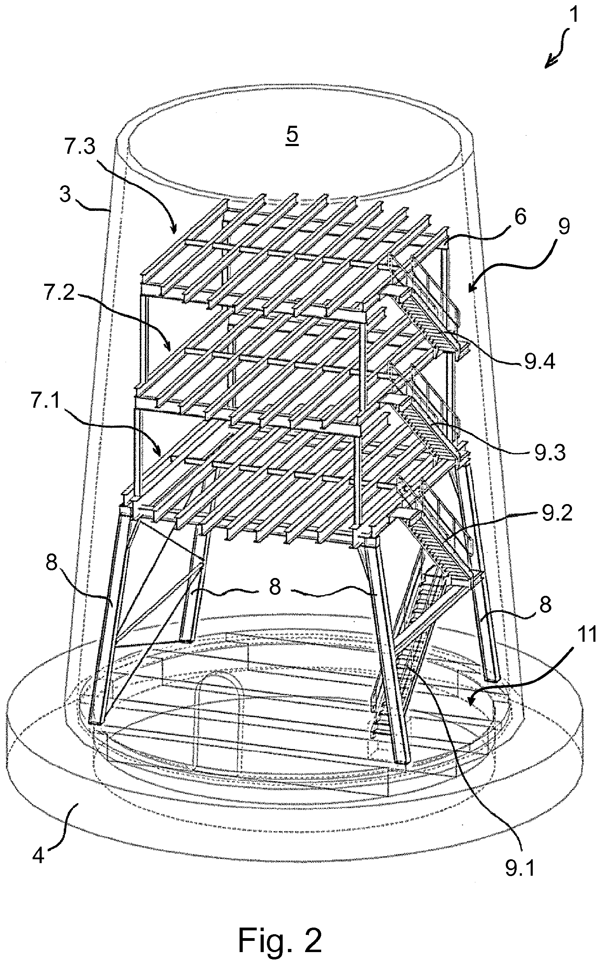

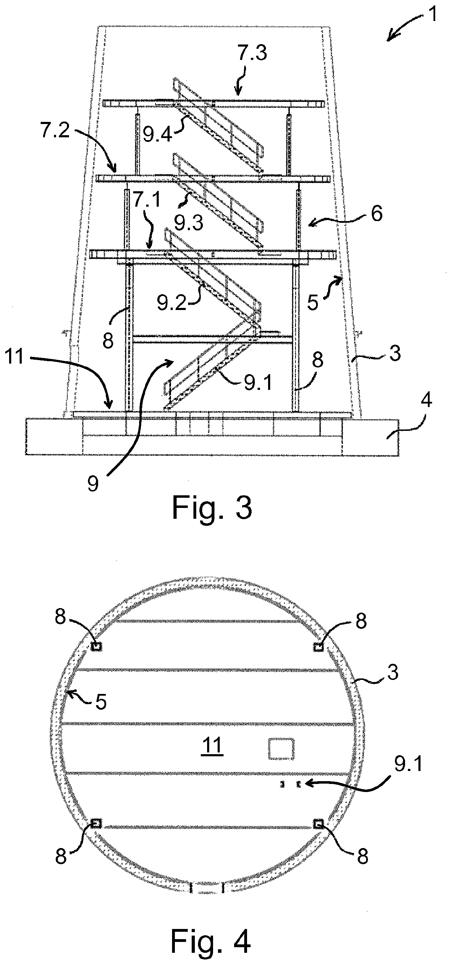

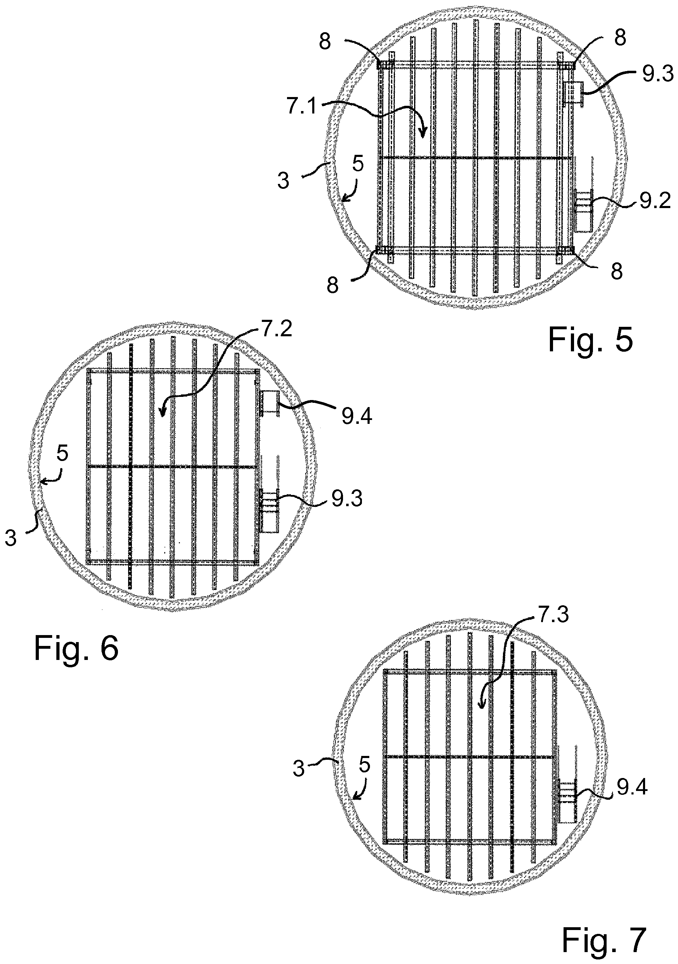

In den Fig. 2 bis Fig. 7 ist ein zweites Ausführungsbeispiel einer erfindungsgemäßen Windenergieanlagenanordnung dargestellt. Die Windenergieanlagenanordnung umfasst eine auf dem Fundament 4 der Windenergieanlage 1 aufgesetzte und von dem Turm 3 der Windenergieanlage 1 ummantelte Stahlkonstruktion 6 mit drei vertikal übereinander angeordneten Installationsebenen 7.1, 7.2, 7.3. Auf die Darstellung von Bauelementen wie Bodenbelägen, Vertäfelungen oder Geländern der Installationsebenen 7.1, 7.2, 7.3 ist dabei verzichtet. Die Stahlkonstruktion 6 ist über vier in einem Winkel von maximal 30° zur Vertikalen geneigte, längsgestreckte Stützen 8 auf dem Fundament 4 der Windenergieanlage 1 abgestützt. Die Stützen 8 sind von der Innenwandung 5 des Turms 3 beabstandet, sodass sie nicht invasiv in die Statik des Turms 3 eingreifen, gleichzeitig sind die Stützen 8 endseitig möglichst nah an der Innenwandung 5 des Turms 3 platziert, sodass sie eine möglichst großflächige untere Installationsebene 7.1 aufspannen können.

Die Stahlkonstruktion 6 ist im Wesentlichen aus miteinander verbundenen Stahlträgern gebildet, wobei die Installationsebenen 7.1, 7.2, 7.3 jeweils durch mehrere parallel und nebeneinander gleichverteilte Bodenlängsträger horizontal aufgespannt sind und eine im Wesentlichen rechteckige Grundform aufweisen. Die Bodenlängsträger weisen unterschiedliche Längen auf, wobei die Länge der Bodenlängsträger korrespondierend zu der zylindrischen Form der Innenwandung 5 des Turms 3 von den Eckenbereichen zu einem Mittelbereich der Installationsebenen 7.1, 7.2, 7.3 hin zunehmen. Zwischen den Installationsebenen 7.1, 7.2, 7.3 sind zur vertikalen Beabstandung ebendieser jeweils vier vertikal erstreckte Längsstahlträger vorgesehen, die in Randbeziehungsweise Eckenbereiche der Installationsebenen 7.1, 7.2, 7.3 münden.

Zum Begehen der Installationsebenen 7.1, 7.2, 7.3 weist die Stahlkonstruktion 6 an einer Längsseite ein zusätzliches Treppensystem 9 mit insgesamt vier übereinander angeordnete Treppen 9.1, 9.2, 9.3, 9.4 auf. Eine erste Treppe 9.1 führt von der Bodendecke 11 des Fundaments 4 der Windenergieanlage 1 zu einem horizontal zwischen zwei Stützen 8 gehaltenen Treppenstahlträger der Stahlkonstruktion 6. Die erste Treppe 9.1 ist mit einer ihr gegenüber um 180° gedrehten zweiten Treppe 9.2 verbunden, die von dem Treppenstahlträger zu der unteren Installationsebene 7.1 führt. Eine dritte Treppe 9.3 verbindet eine mittlere Installationsebene 7.2 mit der unteren Installationsebene 7.1, eine vierte Treppe 9.4 führt von der mittleren Installationsebene 7.2. zu einer oberen Installationsebene 7.3.

Die Erfindung ist nicht auf die dargestellte Ausführungsform der Windenergieanlagenanordnung beschränkt. Alternative Ausführungsformen für die Windenergieanlagenanordnung sind unter Beibehaltung der Erfindung beispielsweise dadurch gebildet, dass die Stahlkonstruktion 6 eine abweichende Gestalt aufweist. Insbesondere zeigen die Ausführungsbeispiele der erfindungsgemäßen Windenergieanlagenanordnung nach den Fig. 1 bis Fig. 7 die Stahlkonstruktion 6 als prinzipiellen Rohbau, im Wesentlichen zusammengesetzt aus Stahlträgern. Es ist insofern angedacht, dass die Stahlkonstruktion 6 um weitere Bauelemente, beispielsweise Decken, Fußböden, Wände, Treppengeländer, und andere erweitert wird, die für eine betriebssichere Installation der Rechenknoten und der hierfür notwendigen Infrastrukturgewerke auf den Installationsebenen 7.1, 7.2, 7.3, 7.4, 7.5 erforderlich sind.

Gleiche Bauteile und Bauteilfunktionen sind durch gleiche Bezugszeichen gekennzeichnet.

## Patentansprüche

1. Windenergieanlagenanordnung umfassend
- eine Windenergieanlage (1) mit einem Fundament (4), mit einem auf dem Fundament (4) abgestützten vertikal erstreckten Turm (3), mit einem vorzugsweise endseitig an dem Turm (3) gehaltenen Maschinenhaus und mit einem an dem Maschinenhaus gehaltenen und mit ebendiesem zusammenwirkenden Rotor (2),
- eine in dem Turm (3) der Windenergieanlage (1) vorgesehene Stahlkonstruktion (6) mit wenigstens einer Installationsebene (7.1, 7.2, 7.3, 7.4, 7.5) mit darauf installierten Rechenknoten und/oder mit darauf installierten, für den Betrieb der Rechenknoten notwendigen Infrastrukturgewerken,
wobei die Stahlkonstruktion (6) selbsttragend und zu einer Innenwandung (5) des Turms (3) beabstandet mittels Stützen (8) auf dem Fundament (4) der Windenergieanlage (1) abgestützt ist.

2. Windenergieanlagenanordnung nach Anspruch 1, **dadurch gekennzeichnet, dass** die Stahlkonstruktion (6) wenigstens zwei und bevorzugt drei bis fünf vertikal übereinander angeordnete Installationsebenen (7.1, 7.2, 7.3, 7.4, 7.5) mit darauf installierten Rechenknoten und/oder Infrastrukturgewerken umfasst.

3. Windenergieanlagenanordnung nach Anspruch 1 oder 2, **dadurch gekennzeichnet, dass** die Stahlkonstruktion (6) vorzugsweise drei oder mehr und besonders bevorzugt vier mit dem Fundament (4) verbundene, vertikal und/oder um einen Winkel von maximal 30° zur Vertikalen geneigt erstreckte Stützen (8) vorsieht.

4. Windenergieanlagenanordnung nach Anspruch 3, **dadurch gekennzeichnet, dass** die Installationsebenen (7.1, 7.2, 7.3, 7.4, 7.5) eine rechteckige Grundform aufweisen und/oder dass die Stützen (8) endseitig in Eckenbereiche und/oder Randbereiche der Installationsebenen (7.1, 7.2, 7.3, 7.4, 7.5) münden.

5. Windenergieanlagenanordnung nach einem der Ansprüche 1 bis 4, **dadurch gekennzeichnet, dass** jedenfalls zwischen einzelnen Installationsebenen (7.1, 7.2, 7.3, 7.4, 7.5) mit darauf installierten Rechenknoten eine Installationsebene (7.1, 7.2, 7.3, 7.4, 7.5) mit darauf installierten Infrastrukturgewerken vorgesehen ist.

6. Windenergieanlagenanordnung nach einem der Ansprüche 1 bis 5, **dadurch gekennzeichnet, dass** in dem Turm (3) der Windenergieanlage (1) eine bis zu dem Maschinenhaus geführte Treppe und/oder Leiter und/oder Aufzuganlage vorgesehen ist und dass an der Stahlkonstruktion (6) ein zusätzliches Treppensystem (9) gehalten ist, wobei das zusätzliche Treppensystem (9) die Installationsebenen (7.1, 7.2, 7.3, 7.4, 7.5) untereinander und/oder mit einer Grundplatte und/oder Bodendecke des Fundaments der Windenergieanlage begehbar über Treppen (9.1, 9.2, 9.3, 9.4) verbindet. und/oder dass der Stahlkonstruktion (6) zum Transport der Rechenknoten und/oder der Infrastrukturgewerke zu den Installationsebenen (7.1, 7.2, 7.3, 7.4, 7.5) ein zusätzliches Transportsystem, insbesondere ein Lastenaufzug, zugeordnet ist.

7. Windenergieanlagenanordnung nach Anspruch 6, **dadurch gekennzeichnet, dass** auf den Installationsebenen (7.1, 7.2, 7.3, 7.4, 7.5) Lagerflächenbereiche und/oder begehbare Wegeflächenbereiche freigehalten sind, die mit dem zusätzlichen Treppensystem (9) und/oder mit dem zusätzlichen Transportsystem der Stahlkonstruktion (6) begehbar verbunden sind.

8. Windenergieanlagenanordnung nach einem der Ansprüche 1 bis 7, **dadurch gekennzeichnet, dass** als Infrastrukturgewerke Klimatisierungsanlagen und/oder Stromunterverteilungsvorrichtungen und/oder unterbrechungsfreie Stromversorgungseinrichtungen mit einem Energiespeicher vorgesehen sind.

9. Windenergieanlagenanordnung nach einem der Ansprüche 1 bis 8, **dadurch gekennzeichnet, dass** die Rechenknoten wenigstens ein Rechenmodul und wenigstens ein Datenspeichermodul aufweisen.

10. Windenergieanlagenanordnung nach einem der Ansprüche 1 bis 9, **dadurch gekennzeichnet, dass** die Rechenknoten und/oder die Infrastrukturgewerke über eine interne Verteilerleitung mit dem Maschinenhaus der Windenergieanlage (1) verbunden sind derart, dass von der Windenergieanlage (1) erzeugte elektrische Energie jedenfalls anteilig an die Rechenknoten und/oder an die Infrastrukturgewerke bereitstellbar ist.
